# EUROPEAN PATENT SPECIFICATION

(11) **EP 0 708 790 B1**
(45) Date of publication and mention of the grant of the patent: **09.09.1998**
(21) Application number: 94920917.5
(22) Date of filing: 09.06.1994
(51) Int. Cl.: C08G 18/32, C08G 18/38, C08G 18/48, C08J 9/00, E04B 1/80

(54) **RIGID POLYURETHANE FOAMS**
POLYURETHAN-HARTSCHAUMSTOFFE
MOUSSES RIGIDES DE POLYURETHANNE

(30) Priority: 14.07.1993 GB 9314556
(43) Date of publication of application: 01.05.1996
(73) Proprietor: IMPERIAL CHEMICAL INDUSTRIES PLC, London SW1P 3JF (GB)
(72) Inventor: DE VOS, Rik, B-3110 Rotselaar (BE); KEANE, Norman, Washington, B-1050 Ixelles (BE)
(74) Representative: Swinnen, Anne-Marie
(86) International application number: EP9401884
(87) International publication number: WO9502620

(56) References cited:
- EP-A- 0 498 628
- FR-A- 1 461 357
- US-A- 3 165 483

## Description

This invention relates to rigid polyurethane foams and more especially to open celled rigid polyurethane foam and to methods for their preparation and to their use in evacuated insulation panels.

The production of foamed materials based on polyurethane and other polymer systems derived from organic polyisocyanates is well established. Depending upon the formulations used in their manufacture, the products can vary in texture from the soft flexible foams used as cushioning materials to the rigid foams used as insulating or structural materials.

Rigid polyurethane foams can be of the closed cell type or of the open cell type. An important application of open celled rigid polyurethane foam is as filler material in evacuated insulation panels as described in European Patent Publications Nos 188806 and 498628.

In European Patent Publication No. 498628 a process for preparing open celled rigid polyurethane foam is described, said process comprising the step of reacting an organic polyisocyanate with an isocyanate-reactive material in the presence of a blowing promotor being an isocyanate-reactive cyclic compound of formula: 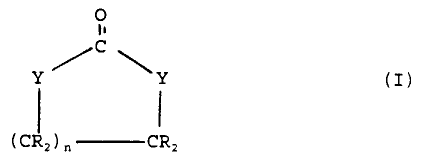 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an inert insoluble organic liquid which is present as the dispersed phase of an emulsion or a microemulsion and in the presence of a metal salt catalyst.

By this process fine celled open celled rigid polyurethane foams are obtained with cell sizes in the range of 80 to 120 micron.

It is generally known that the smaller the cell size of the foam the better its performance in evacuated insulation panels in terms of the required vacuum degree to obtain a satisfactory insulation property and in terms of the ageing of the panel (i.e. the decrease in thermal insulation with lapse of time due to a decrease in the vacuum degree).

Therefore it is an object of the present invention to provide a process for preparing open celled rigid polyurethane foams with smaller cell sizes than the known ones.

Accordingly the present invention provides a process for the preparation of rigid foams comprising the step of reacting an organic polyisocyanate with an isocyanate-reactive material in the presence of a blowing promotor being an isocyanate-reactive cyclic compound of formula: 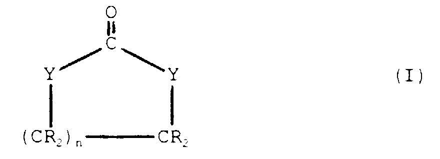 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆, or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an inert insoluble organic liquid which is present as the dispersed phase of an emulsion or a microemulsion and in the presence of a metal salt catalyst, characterised in that the isocyanate-reactive material comprises a polyether polyol of average nominal functionality 2 to 6 and number average equivalent molecular weight between 1000 and 2000.

By the process of the present invention fine celled open celled rigid polyurethane foams are obtained with cell sizes in the range 50 to 90 micron.
Due to its finer cell sizes these foams perform better in evacuated insulation panels than the known open celled rigid foams.

EP 419114 describes a method for preparing polyurethane foams using a cyclic carbonate as blowing promotor. If rigid foams are to be prepared rigid polyols are used (molecular weight of 62 to 1500 and functionality of 2 to 8); if flexible foams are to be prepared flexible polyols are used (molecular weight of 1000 to 10000 and functionality of 2 to 4). EP 419114 does not describe the use of flexible polyols in the preparation of rigid foams. EP 419114 does also not describe the use of inert insoluble organic liquids.

The polyether polyol for use in the process of the present invention is a polyether polyol known in the art for the production of flexible polyurethane foams. Preferably this polyether polyol has a functionality of 2 to 4 and an OH value (in mg KOH/g) of between 20 and 80, preferably between 40 and 70, more preferably between 45 and 60 and most preferably between 50 and 55. It has an equivalent molecular weight of between 1000 and 2000 meaning that a bifunctional polyether polyol (functionality 2) has a molecular weight of between 2000 and 4000, a trifunctional (functionality 3) between 3000 and 6000, etc.

These polyether polyols are obtained by the polymerisation of a cyclic oxide, such as ethylene oxide and propylene oxide, in the presence of a polyfunctional initiator. Suitable initiators contain a plurality of active hydrogen atoms and include water and polyols, for example ethylene glycol, propylene glycol, diethylene glycol, dipropylene glycol, cyclohexane dimethanol, resorcinol, bisphenol A, glycerol, trimethylolpropane, 1,2,6-hexanetriol, pentaerythritol, sorbitol and sucrose. Mixtures of initiators and/or cyclic oxides may be used.

Especially useful polyether polyols include polyoxypropylene diols and triols and poly(oxyethylene-oxypropylene) diols and triols obtained by the simultaneous or sequential addition of ethylene and propylene oxides to di- or trifunctional initiators as fully described in the prior art. Random copolymers having oxyethylene contents of 10 to 80 %, block copolymers having oxyethylene contents of up to 25 %, and random/block copolymers having oxyethylene contents of up to 50 %, based on the total weight of oxyalkylene units may be mentioned. Mixtures of the said diols and triols can be particularly useful. Preferred diols and triols are ethylene glycol, diethylene glycol, dipropylene glycol and glycerol.

The present polyether polyol known in the art for the production of flexible polyurethane foams is used in amounts ranging from 2 to 40 % by weight based on the total isocyanate-reactive components. Generally this polyether polyol is added in such amounts that the compression strength of the rigid polyurethane foam does not decrease below 170 kPa and generally remains within the range 170 to 240 kPa.

A preferred compound of formula (I) wherein Y is O is an isocyanate-reactive cyclic carbonate which is glycerol carbonate.

Preferred compounds of formula (I) wherein Y is NR¹ are isocyanate-reactive cyclic ureas of formula: 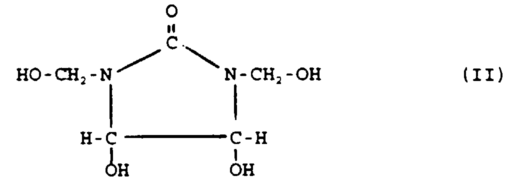 and

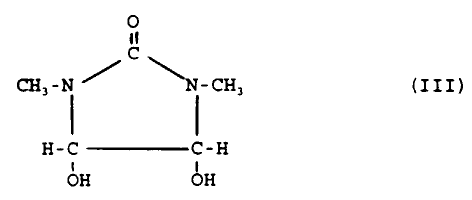

The isocyanate-reactive cyclic blowing promotor is used in amounts ranging from 1 to 99 %, preferably from 1 to 60 % by weight based on the total isocyanate-reactive material.

Suitable further blowing agents may be used in the method of the present invention such as water or inert low boiling compounds having a boiling point of above -50°C at 1 bar.

The amount of water used as blowing agent may be selected in known manner to provide foams of the desired density, typical amounts being in the range from 0.05 to 5 parts by weight per 100 parts by weight of reactive ingredients, although it may be a particular embodiment of the present invention to incorporate up to 10 % by weight or even up to 20 % by weight of water.

Suitable inert blowing agents include, for example, hydrocarbons, dialkyl ethers, alkyl alkanoates, aliphatic and cycloaliphatic hydrofluorocarbons, hydrochlorofluorocarbons, chlorofluorocarbons and fluorine-containing ethers. Suitable hydrocarbon blowing agents include lower aliphatic or cyclic hydrocarbons such as n-pentane, isopentane, cyclopentane, neopentane, hexane and cyclohexane.

The insolubility of the inert organic liquid in the reaction mixture arises from the fact that it is insoluble in the isocyanate-reactive material and/or the polyisocyanate.
Solubility in these materials can be determined by conventional techniques.

The expression "inert" is to be understood as meaning that the organic liquid is chemically inert to the other ingredients of the foam formulation.

The inert insoluble organic liquid is a highly fluorinated or perfluorinated compound. A highly fluorinated compound as used herein is defined as a compound wherein at least 75 % and preferably at least 90 % and most preferably at least 99 % of the hydrogen atoms have been replaced by fluorine atoms.

Suitable highly fluorinated or perfluorinated compounds which may be used in the present invention include aliphatic or cycloaliphatic compounds such as alkanes or cycloalkanes which may be substituted or non substituted, cyclic or non cyclic compounds containing at least one O atom, which may be substituted or non substituted, such as fluorinated ethers, cyclic or non cyclic compounds containing at least one N atom, which may be substituted or non substituted, such as fluorinated amines, cyclic or non cyclic compounds containing O and N atoms, which may be substituted or non substituted, such as fluorinated hydroxyl amines or fluorinated aminoethers, cyclic or non cyclic compounds containing at least one S atom, which may be substituted or non substituted, such as fluorinated sulfones, for example CF₃SO₂CF₃ and CF₃SO₂CF₂CF₃.

Particular examples of highly fluorinated or perfluorinated hydrocarbons include: perfluoronorbornadiene,perfluorodecaline, perfluorodimethylcyclohexane, perfluoromethylcyclohexane, perfluoro-1-methyldecaline, perfluorophenantrene, perfluorodimethylcyclobutane, perfluoropentane, perfluorohexane, C₉F₁₉CHF₂, C₈F₁₈, C₇F₁₆ and their cyclic derivatives.

Particular examples of highly fluorinated or perfluorinated oxygen containing compounds include: perfluorobutyltetrahydrofuran and perfluoropropyltetrahydrofuran.

Particular examples of highly fluorinated or perfluorinated compounds containing N atoms or N atoms and O atoms include fluorine-containing tertiary amines, for example, (CHF₂)₃N, CF₃N(CHF₂)₂, (CF₃)₂NC₂F₅, CF₃N(C₂F₅)₂, (C₂F₅)₃N, (CF₃)₂NCF₂CF₂H, CF₃CH₂N(CH₃)₂ and N-methyloctafluoropyrrolidine, fluorine-containing hydrazines, for example, (CF₃)₂NN(CF₃)₂, or (CF₃)₂NOCH₃, (CF₃)₂NOC₂F₅, CF₃NOCF₂CF₂ and (CF₃)₂NOCF₂C(CF₃) FON(CF₃)₂ and fluorine-containing amino-ethers, for example (CF₃)₂NCF₂CF₂OCF₃ and most preferably perfluoro-N-methylmorpholine, perfluorotripentylamine, perfluorotributylamine, perfluorotripropylamine, perfluoro-N-methylpiperidine.

Other suitable fluorinated compounds include the perfluorinated ethers commercialised by Montefluos S.p.A. as Galden HT 200, Galden HT 230, Galden HT 250 and Galden HT 270 (Galden is a trademark).

To ensure zero ozone depletion potential, it is preferred to use fluorinated compounds containing no other halogen atoms.

The inert insoluble organic liquid is used in the process of the present invention in amounts ranging from 0.05 to 5 % by weight based on the total reaction system.

The substantially insoluble inert organic liquid will usually be incorporated in the foam-forming reaction mixture in the form of an emulsion or preferably a microemulsion in one of the major components, that is to say in the isocyanate-reactive component and/or the polyisocyanate component. Such emulsions or microemulsions may be prepared using conventional techniques and suitable emulsifying agents.

Emulsifying agents suitable for preparing stable emulsions or microemulsions of fluorinated liquid compounds in organic polyisocyanates and/or isocyanate-reactive compounds include surfactants chosen from the group of nonionic, ionic (anionic or cationic) and amphoteric surfactants. Preferred surfactants for emulsifying the fluorinated liquid compound in the isocyanate-reactive composition are fluoro surfactants and/or alkoxylated alkanes. Preferred surfactants for emulsifying the fluorinated liquid compound in the polyisocyanate composition are non-isocyanate-reactive silicone surfactants.

Preferred metal salt catalysts for use in the present invention are those selected among group Ia and group IIa metal salts, more preferably among group Ia and group IIa metal carboxylates.

Particularly suitable catalysts for use in the present invention are potassium acetate and potassium ethylhexoate.

The metal salt catalyst is used in the process of the present invention in amounts ranging from 0.01 to 3 % by weight based on the total reaction system.

Organic polyisocyanates which may be used in the method of the present invention include aliphatic, cycloaliphatic, araliphatic and aromatic polyisocyanates but especially the polyisocyanates proposed in literature for use in the production of foams. Of particular importance are aromatic diisocyanates such as tolylene and diphenylmethane diisocyanate in the well known pure, modified or crude forms. Special mention may be made of the so-called MDI variants (diphenylmethane diisocyanate modified by the introduction of urethane, allophanate, urea, biuret, carbodiimide, uretonimine or isocyanurate residues) and the mixtures of diphenylmethane diisocyanate(s) and oligomers thereof known in the art as "crude" or "polymeric" MDI (polymethylene polyphenylene polyisocyanates).

The isocyanate-reactive material used in the method of the present invention preferably comprises besides the isocyanate-reactive cyclic blowing promotor and the present polyether polyol known in the art for the production of flexible polyurethane foams also other isocyanate-reactive materials generally used in the production of rigid polyurethane foams.

Such isocyanate-reactive compounds generally used in the production of rigid polyurethane foam have a molecular weight of 62 to 1500, an equivalent molecular weight of 31 to 750 and a functionality of 2 to 8, especially 3 to 8 and include polyols, polyamines, polyimines, polyenamines and mixtures thereof.

Polymeric polyols for use in the production of rigid polyurethane foams have been fully described in the prior art and include reaction products of alkylene oxides, for example ethylene oxide and/or propylene oxide, with initiators containing from 3 to 8 active hydrogen atoms per molecule. Suitable initiators include polyols, for example, glycerol, trimethylolpropane, triethanolamine, pentaerythritol, sorbitol and sucrose, and polyamines, for example tolylene diamine, diaminodiphenylmethane and polymethylene polyphenylene polyamines, and aminoalcohols, for example, ethanolamine and diethanolamine, and mixtures of such initiators. Other suitable polymeric polyols include polyesters obtained by the condensation of appropriate proportions of glycols and higher functionality polyols with dicarboxylic acids. Still further suitable polymeric polyols include hydroxyl terminated polythioethers, polyamides, polyesteramides, polycarbonates, polyacetals, polyolefins and polysiloxanes.

Polyamines having a molecular weight below 1000 include aliphatic, cycloaliphatic or araliphatic polyamines containing two or more primary and/or secondary amino groups, such as the low molecular weight amino-ended polyethers, and aromatic polyamines such as DETDA.

In addition to the ingredients already mentioned the foam-forming mixture may contain one or more other auxiliaries or additives conventional to isocyanate-based foam formulations. Such optional additives include further conventional catalysts, fire retardants, smoke suppressants, organic or inorganic fillers, thixotropic agents, dyes, pigments, mould release agents, surfactants, foam stabilisers and the like.

Isocyanate indices of from 70 to 140 will typically be used in operating the method of the present invention but lower indices may be used if desired. Higher indices, for example 150 to 500 or even up to 3000, may be used in conjunction with trimerisation catalysts to make foams containing isocyanurate linkages.

At indices higher than 400 the open celled fine celled rigid foams of the present invention can be made by a so-called full prepolymer process wherein all of the isocyanate-reactive compounds (in this case the polyether polyol generally used in the production of flexible polyurethane foams) are reacted with the polyisocyanate in the absence of the blowing agent. This prepolymer is then subsequently used to prepare the foam by reaction of the prepolymer with the cyclic isocyanate-reactive blowing promotor, the inert insoluble organic liquid and the metal salt catalyst of the present invention and optionally other additives such as surfactants.

To reduce the number of component streams delivered to the final mixing apparatus, the cyclic isocyanate-reactive blowing promotor, the catalyst, the inert insoluble organic liquid and optionally other additives may be premixed with one of the major components of the foam formulation, in general with the isocyanate-reactive component.

Therefore the present invention also provides an isocyanate-reactive composition comprising a blowing promotor being an isocyanate-reactive cyclic compound of formula: 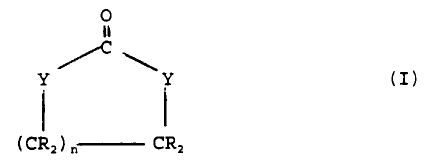 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
an inert insoluble organic liquid which is present as the dispersed phase of an emulsion or a microemulsion and a metal salt catalyst, characterised in that said isocyanate-reactive composition further comprises a polyether polyol of average nominal functionality 2 to 6 and number average equivalent molecular weight between 1000 and 2000.

When the inert insoluble organic liquid is added to both the isocyanate-reactive component and the polyisocyanate component even finer cell sizes are obtained than when the inert insoluble organic liquid is added only to one of these components. This dual stream approach may yield cell sizes of from 30 to 70 micron while the single stream would yield cell sizes of from 50 to 90 micron for the same total amount of inert insoluble organic liquid.

The method of the present invention may be put into practice making use of conventional techniques. Thus known mixing methods may be used and the foams may be produced in the form of slabstock, mouldings, cavity fillings, sprayed foam, frothed foam or laminates with other materials such as hardboard, plasterboard, paper, plastics or metal.

Rigid polyurethane foams prepared in accordance with the method of the invention are characterised by having open cells (closed cell content below 10 %) and a very fine cell structure (cell sizes smaller than 90 micron).

They are of particular use for evacuated insulation panel applications where they show superior thermal insulation properties.

Evacuated insulation panels generally comprise a low thermal conductivity filler material (such as open celled polyurethane foam) and a vessel formed of a gastight film enveloping said filler, the whole being evacuated to an internal pressure of about 1-2 mbar or less and then hermetically sealed.

The pressure level to which the vessel must be evacuated in order to obtain a satisfactory insulating property depends on the specific filler material. Also the extent of increase in thermal conductivity with internal pressure increase with lapse of time (owing i.a. to gases such as air and water vapor diffusing gradually) depends on the type of filler material.

Evacuated insulation panels filled with the fine celled open celled rigid polyurethane foams of the present invention are improved with respect to the necessary vacuum degree and with respect to the degradation of the thermal insulating property with lapse of time compared to evacuated insulation panels filled with the known open celled rigid polyurethane foam of the prior art, due to its finer cell size.

General descriptions of the construction of evacuated insulation panels and their use in thermal devices can be found in US Patents Nos 5,066,437, 5,032,439 and 5,076,984 and European Patent Publications Nos 434266, 434225 and 181778, all incorporated herein by reference as well as the references mentioned therein.

Preferably the fine celled open celled rigid polyurethane foam of the present invention is preconditioned prior to placement in the gastight envelope. This preconditioning involves heating and agitating the filler material preferably under reduced pressure in order to remove contaminants.

To improve the performance of the evacuated insulation panel, materials are provided within the sealed panels to absorb or otherwise interact with gases and vapors that remain due to imperfect evacuation, that permeate the enclosure from the outside atmosphere or evolve from the polyurethane foam filler itself. Such materials are known as getters and may include, for example, activated carbon, molecular sieves and zeolites to adsorb volatiles evolving from the polyurethane foam filler. Other suitable getter materials are described in US Patents Nos 4,000,246, 4,444,821, 4,663,551, 4,702,986 and 4,726,974 and in European Patent Publications Nos 434266 and 181778.

The insulation panels can also instead of being totally evacuated be partially or fully filled with a gas of a high thermal insulation value such as Xenon or Krypton. Loadings of 5 to 50 mbar of these gases would mask the dilution effect of air ingress into the panel over the lifetime of the panel (15 to 20 years).

The invention is illustrated but not limited by the following examples.

### Example 1

The following ingredients were used:
Daltolac XR 159 being a polyether polyol of OH value 500, molecular weight 370 and functionality 3.3 available from Imperial Chemical Industries PLC;
Polyol 1 being a polyether polyol having a functionality of 2, a OH value of 54 and a molecular weight of 2200;
Polyol 2 being a polyether polyol having a functionality of 2, a OH value of 50 to 54 and a molecular weight of 2158 (Daltocel F 452 available from Imperial Chemical Industries PLC);
Polyol 3 being a polyether polyol having a functionality of 2, a OH value of 52 and a molecular weight of 2200;
DC 193 being a silicone surfactant available from Dow Corning;
FC 430 being a fluorosurfactant available from 3M;
FC 431 being a fluorosurfactant available from 3M;
Catalyst LB being a metal salt catalyst available from Imperial Chemical Industries PLC;
Fixapret NF being a cyclic urea available from BASF;
perfluoropentane available from 3M;
Suprasec DNR being a polymeric MDI available from Imperial Chemical Industries PLC.

Rigid foams of open cell, fine cell structure and good insulation property were prepared by using the following formulation (amounts are given in parts by weight):

| Polyol composition | | | | | |
|---|---|---|---|---|---|
| Daltolac XR 159 | 100 | 70 | 70 | 70 | 70 |
| Polyol 1 | 0 | 30 | 30 | 0 | 0 |
| Polyol 2 | 0 | 0 | 0 | 30 | 0 |
| Polyol 3 | 0 | 0 | 0 | 0 | 30 |
| DC 193 | 4 | 4 | 4 | 4 | 4 |
| FC 430 | 3 | 3 | 3 | 3 | 3 |
| Catalyst LB | 1.8 | 1.8 | 1.8 | 1.8 | 1.8 |
| Fixapret NF | 3.5 | 3.5 | 3.5 | 3.5 | 3.5 |
| perfluoropentane | 9.8 | 9.8 | 4.9 | 9.8 | 9.8 |

| Polyisocyanate composition | | | | | |
|---|---|---|---|---|---|
| Suprasec DNR | 134.8 | 134.8 | 134.8 | 132 | 132 |
| FC 431 | 0 | 0 | 2.0 | 0 | 0 |
| perfluoropentane | 0 | 0 | 4.9 | 0 | 0 |

The resulting rigid foams had the following properties.

| Foam | Ia | Ib | Ic | Id | Ie |
|---|---|---|---|---|---|
| Density (kg/m³) | 43.0 | 44.2 | 46.5 | 43.8 | 44.8 |
| Closed cell content (%) | 5.2 | 7.1 | 7.2 | 7.2 | 7.5 |
| Cell size (micron) | 120 | 70 | 40 | 90 | 90 |

Density (core density) was measured according to DIN 53420 standard. Closed cell content was measured according to BS 4370 Method 10 standard and represents volume % of closed cells. Cell size was measured according to ISO 4590 standard.

### Example 2

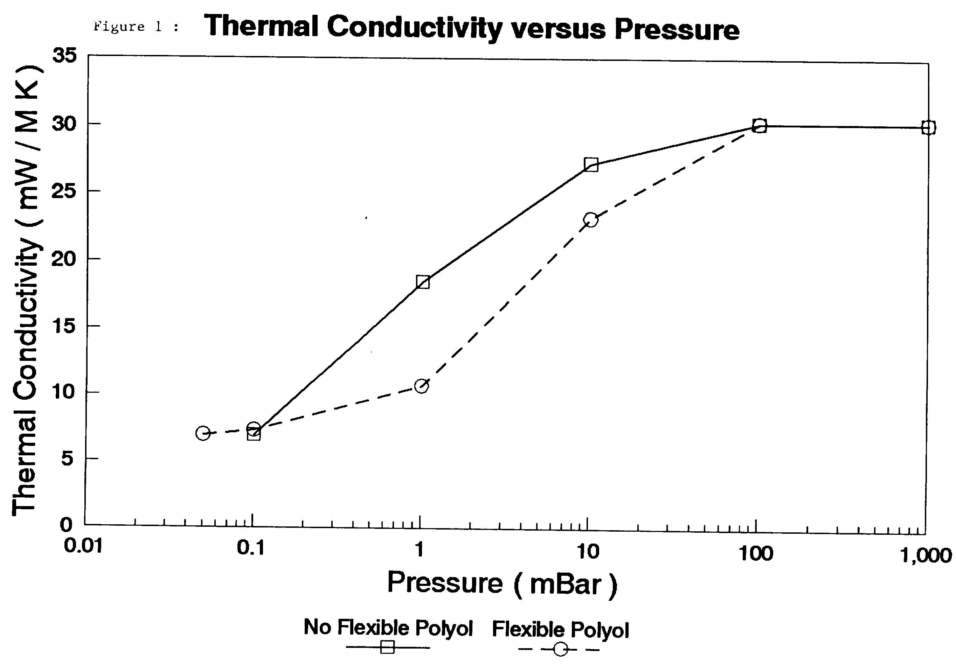

Foam Ib prepared according to the method described in example 1 above was enveloped in a plastic bag and the whole connected to a vacuum pump. The sample was continuously pumped down and the thermal conductivity at 10°C (lambda value in mW/m°K) of the sample at different vacuum levels was measured by using a Heat Flux meter. By measuring the lambda value at different pressures a lambda versus pressure curve was obtained (see figure 1 which is a log diagram).

The same experiment was done with the foam Ia prepared according to the method described in example 1 above (comparative example, i.e. without the polyether polyol generally used in the production of flexible polyurethane foams).

Figure 1 below represents the lambda versus pressure curve for foam Ib (reference: flexible polyol) and for foam Ia (reference: no flexible polyol).

These experiments show that foam Ib performs better in terms of increase in thermal conductivity with internal pressure. This means that evacuated insulation panels filled with a rigid polyurethane foam of the present invention perform satisfactory at a lower degree of vacuum and further maintain a satisfactory heat insulating property over a longer period of time (improved ageing).

### Example 3

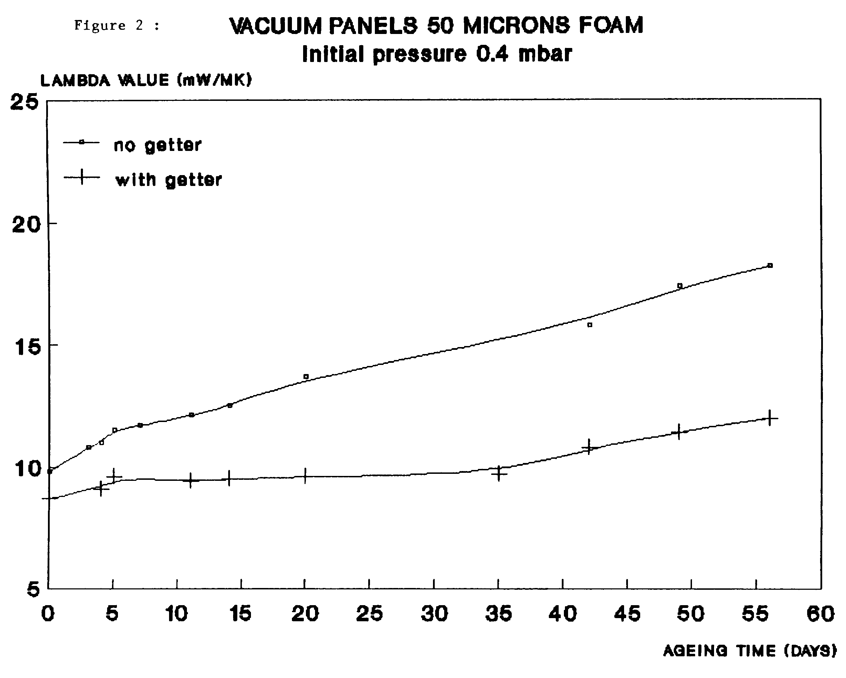

An evacuated insulation panel was made by enveloping the open celled fine celled foam Ib prepared according to the method described in example 1, which was first preconditioned by heating and agitating under reduced pressure, by a film having a permeability of 0.02 cc/m²/day and thereafter evacuating the whole to a pressure of 0.4 mbar.
The increase in lambda value with lapse of time (owing to an increase in internal pressure) of this evacuated insulation panel was measured (see figure 2).

The same experiment was repeated with an evacuated insulation panel filled with foam Ib and a getter (1 % by weight of molecular sieve type 13 X available from Union Carbide).

As can be seen from figure 2 the extent of increase in internal pressure and lambda with lapse of time is much smaller for the panel containing the getter, leading to improved ageing of the panel.

## Claims

1. Process for the preparation of rigid foams comprising the step of reacting an organic polyisocyanate with an isocyanate-reactive material in the presence of a blowing promotor being an isocyanate-reactive cyclic compound of formula: 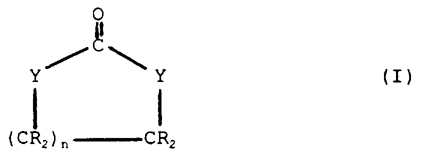 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an inert crganic liquid, insoluble in the isocyanate-reactive material and/or the polyisocyanate, selected from highly fluorinated or perfluorinated hydrocarbons preferably containing at least one O, N or S atom, which is present as the dispersed phase of an emulsion or a microemulsion and in the presence of a metal salt catalyst, characterised in that the isocyanate-reactive material comprises a polyether polyol of average nominal functionality 2 to 6 and number average equivalent molecular weight between 1000 and 2000.

2. Process according to claim 1 wherein said polyether polyol has an OH value of between and 80.

3. Process according to any of the preceding claims wherein said polyether polyol is a polyoxypropylene diol or triol or a poly(oxyethylene-oxypropylene) diol or triol obtained by the simultaneous or sequential addition of ethylene and propylene oxides to di- or trifunctional initiators.

4. Process according to claim 3 wherein said di- or trifunctional initiators are selected from the group consisting of ethylene glycol, diethylene glycol, dipropylene glycol and glycerol.

5. Process according to any one of the preceding claims wherein the polyether polyol is used in amounts ranging from 2 to 40 % by weight based on the total isocyanate-reactive components.

6. Process according to any one of the preceding claims wherein the isocyanate-reactive cyclic blowing promotor is a cyclic urea of formula 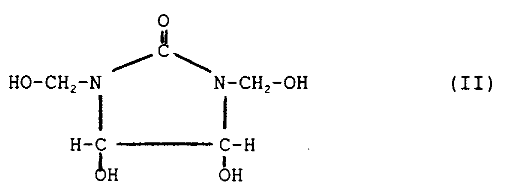 or

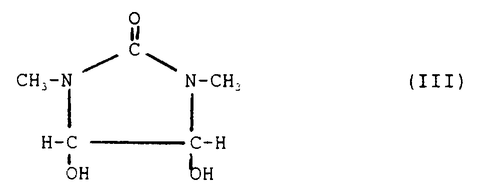

7. Process according to any one of the preceding claims wherein the metal salt catalyst is a group Ia or group IIa metal carboxylate.

8. Process according to any one of the preceding claims wherein the isocyanate-reactive material further comprises isocyanate-reactive materials generally used in the production of rigid polyurethane foams.

9. Isocyanate-reactive composition comprising a blowing promotor being an isocyanate-reactive cyclic compound of formula: 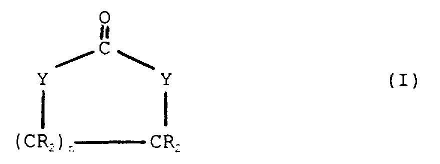 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
an inert organic liquid, insoluble in the isocyanate-reactive material and/or the polyisocyanate, selected from highly fluorinated or perfluorinated hydrocarbons preferably containing at least one O, N or S atom, which is present as the dispersed phase of an emulsion or a microemulsion and a metal salt catalyst, characterised in that said isocyanate-reactive composition further comprises a polyether polyol of average nominal functionality 2 to 6 and number average equivalent molecular weight between 1000 and 2000.

10. Rigid open celled polyurethane foam obtainable by a process as defined in any one of claims 1 to 8.

11. Evacuated insulation panel comprising a filler material and a vessel formed of a gastight film enveloping said filler, characterised in that said filler material comprises a rigid open celled polyurethane foam as defined in claim 10.

## Patentansprüche

1. Verfahren zur Herstellung von steifen Schaumstoffen, umfassend den Schritt der Umsetzung eines organischen Polyisocyanats mit einem isocyanatreaktiven Material in Gegenwart eines die Auftreibung fördernden Mittels, das eine isocyanatreaktive cyclische Verbindung der Formel 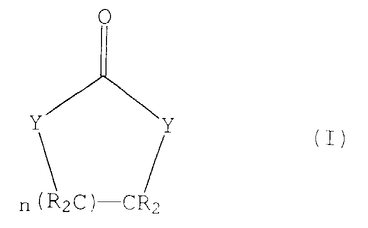 ist, wobei
Y gleich O oder NR¹ ist, wobei jeder R¹ unabhängig ein niederer C₁-C₆-Alkylrest oder ein mit einer isocyanatreaktiven Gruppe substituierter niederer Alkylrest ist;
jedes R unabhängig Wasserstoff, ein niederer C₁-C₆-Alkylrest oder (CH₂)ₘ-X ist, wobei X eine isocyanatreaktive Gruppe, nämlich OH oder NH₂, und m gleich 0, 1 oder 2 ist; und n gleich 1 oder 2 ist;
mit der Maßgabe, daß mindestens eines von R¹ oder R eine isocyanatreaktive Gruppe ist oder eine solche umfaßt;
und in Gegenwart einer inerten organischen Flüssigkeit, die im isocyanatreaktiven Material und/oder dem Polyisocyanat unlöslich ist, aus den hochfluorierten oder perfluorierten Kohlenwasserstoffen ausgewählt ist und vorzugsweise mindestens ein O-, N- oder S-Atom enthält und als dispergierte Phase einer Emulsion oder Mikroemulsion vorhanden ist, sowie in Gegenwart eines Metallsalz-Katalysators,
**dadurch gekennzeichnet, daß**
das isocyanatreaktive Material ein Polyetherpolyol mit einer durchschnittlichen nominalen Funktionalität von 2 bis 6 und einem Zahlenmittel-Äquivalentmolekulargewicht zwischen 1000 und 2000 umfaßt.

2. Verfahren nach Anspruch 1, wobei das Polyetherpolyol einen OH-Wert zwischen 20 und 80 hat.

3. Verfahren nach einem der vorhergehenden Ansprüche, wobei das Polyetherpolyol ein Polyoxypropylendiol oder -triol oder ein Polyoxyethylenoxypropylendiol oder -triol ist, das durch die gleichzeitige oder aufeinanderfolgende Zugabe von Ethylen- und Propylenoxiden zu di- oder trifunktionellen Startern erhalten wird.

4. Verfahren nach Anspruch 3, wobei die di- oder trifunktionellen Starter aus der Gruppe, bestehend aus Ethylenglykol, Diethylenglykol, Dipropylenglykol und Glycerin, ausgewählt sind.

5. Verfahren nach einem der vorhergehenden Ansprüche, wobei das Polyetherpolyol in Mengen im Bereich von 2 bis 40 Gew.-%, bezogen auf alle isocyanatreaktiven Komponenten, verwendet wird.

6. Verfahren nach einem der vorhergehenden Ansprüche, wobei das isocyanatreaktive die Auftreibung fördernde cyclische Mittel ein cyclischer Harnstoff der Formel 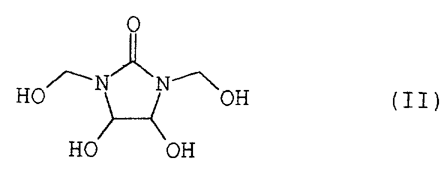 oder 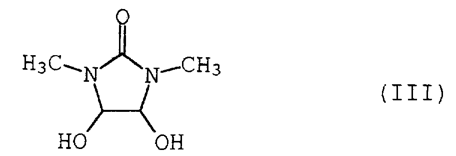 ist.

7. Verfahren nach einem der vorhergehenden Ansprüche, wobei der Metallsalzkatalysator ein Carboxylat eines Metalls der Gruppe Ia oder IIa des Periodensystems ist.

8. Verfahren nach einem der vorhergehenden Ansprüche, wobei das isocyanatreaktive Material weiterhin isocyanatreaktive Materialien umfaßt, die allgemein bei der Herstellung steifer Polyurethanschaumstoffe verwendet werden.

9. Isocyanatreaktive Zusammensetzung, umfassend ein die Auftreibung förderndes Mittel, das eine isocyanatreaktive cyclische Verbindung der Formel 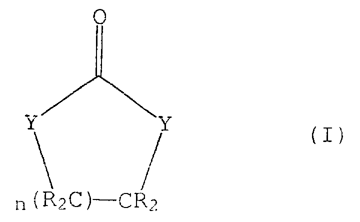 ist, wobei
Y gleich O oder NR¹ ist, wobei jedes R¹ unabhängig ein niederer C₁-C₆-Alkylrest oder ein mit einer isocyanatreaktiven Gruppe substituierter niederer Alkylrest ist;
jedes R unabhängig Wasserstoff, ein niederer C₁-C₆-Alkylrest oder (CH₂)ₘ-X ist, wobei X eine isocyanatreaktive Gruppe, nämlich OH oder NH₂, und m gleich 0, 1 oder 2 ist; und
n gleich 1 oder 2 ist;
mit der Maßgabe, daß mindestens eines von R¹ oder R eine isocyanatreaktive Gruppe ist oder eine solche umfaßt;
eine inerte organische Flüssigkeit, die im isocyanatreaktiven Material und/oder dem Polyisocyanat unlöslich ist, aus den hochfluorierten oder perfluorierten Kohlenwasserstoffen ausgewählt ist und vorzugsweise mindestens ein O-, N- oder S-Atom enthält und als dispergierte Phase einer Emulsion oder Mikroemulsion vorhanden ist, sowie einen Metallsalz-Katalysator,
**dadurch gekennzeichnet, daß**
die isocyanatreaktive Zusammensetzung weiterhin ein Polyetherpolyol mit einer durchschnittlichen nominalen Funktionalität von 2 bis 6 und einem Zahlenmittel-Äquivalentmolekulargewicht zwischen 1000 und 2000 umfaßt.

10. Steifer offenzelliger Polyurethanschaumstoff, erhältlich durch das Verfahren gemäß einem der Ansprüche 1 bis 8.

11. Evakuierte Tsolierplatte, umfassend ein Füllstoffmaterial und einen aus einem luftdichten Film gebildeten, den Füllstoff umhüllenden Behälter,
**dadurch gekennzeichnet daß**
das Füllstoffmaterial einen steifen offenzelligen Polyurethanschaumstoff gemäß Anspruch 10 umfaßt.

## Revendications

1. Procédé de production de mousses rigides, qui comprend les étapes consistant à faire réagir un polyisocyanate organique avec une matière réactive vis-à-vis d'un isocyanate en présence d'un promoteur porogène qui est un composé cyclique réactif vis-à-vis d'un isocyanate, de formule : 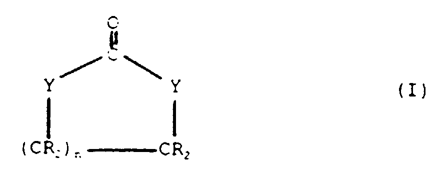 dans laquelle
Y représente O ou NR¹, chaque radical R¹ représentant indépendamment un radical alkyle inférieur en C₁ à C₆ ou un radical alkyle inférieur substitué avec un groupe réactif vis-à-vis d'un isocyanate ;
chaque groupe R représente indépendamment de l'hydrogène, un radical alkyle inférieur en C₁ à C₆ ou (CH₂)ₘ-X, où X est un groupe réactif vis-à-vis d'un isocyanate qui est un groupe OH ou NH₂ et m a la valeur 0, 1 ou 2 ; et
n est égal à 1 ou 2 ;
sous réserve que l'un au moins des groupes R¹ ou R soit lui-même ou comprenne un groupe réactif vis-à-vis d'un isocyanate ;
et en présence d'un liquide organique inerte, insoluble dans la matière réactive vis-à-vis d'un isocyanate et/ou dans le polyisocyanate, choisi parmi des hydrocarbures fortement fluorés ou perfluorés contenant avantageusement au moins un atome d'oxygène, d'azote ou de soufre, qui est présent comme phase dispersée d'une émulsion ou d'une micro-émulsion et en présence d'un catalyseur contenant un sel métallique, caractérisé en ce que la matière réactive vis-à-vis d'un isocyanate comprend un polyéther-polyol ayant une fonctionnalité nominale moyenne de 2 à 6 et une moyenne en nombre du poids moléculaire équivalent comprise entre 1000 et 2000.

2. Procédé suivant la revendication 1, dans lequel le polyéther-polyol a un indice d'hydroxyle compris entre 20 et 80.

3. Procédé suivant l'une quelconque des revendications précédentes, dans lequel le polyéther-polyol est un polyoxypropylènediol ou -triol ou un poly(oxyéthylène-oxypropylène)diol ou -triol obtenu par l'addition simultanée ou par des additions successives d'oxyde d'éthylène et d'oxyde de propylène aux initiateurs difonctionnels ou trifonctionnels.

4. Procédé suivant la revendication 3, dans lequel les initiateurs difonctionnels ou trifonctionnels sont choisis dans le groupe consistant en éthylèneglycol, diéthylèneglycol, dipropylèneglycol et glycérol.

5. Procédé suivant l'une quelconque des revendications précédentes, dans lequel le polyéther-polyol est utilisé en quantités allant de 2 à 40 % en poids sur la base du total des composants réactifs vis-à-vis de l'isocyanate.

6. Procédé suivant l'une quelconque des revendications précédentes, dans lequel le promoteur porogène cyclique réactif vis-à-vis d'un isocyanate est une urée cyclique de formule 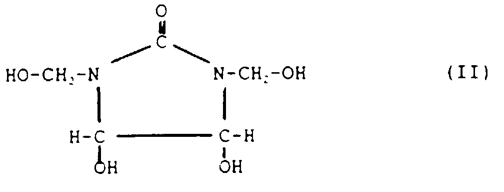 ou

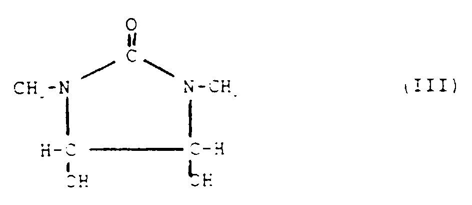

7. Procédé suivant l'une quelconque des revendications précédentes, dans lequel le catalyseur contenant un sel métallique est un carboxylate de métal du groupe Ia ou du groupe IIa.

8. Procédé suivant l'une quelconque des revendications précédentes, dans lequel la matière réactive vis-à-vis d'un isocyanate comprend en outre des matières réactives vis-à-vis d'un isocyanate généralement utilisées dans la production de mousses rigides de polyuréthanne.

9. Composition réactive vis-à-vis d'un isocyanate, comprenant un promoteur porogène qui est un composé cyclique réactif vis-à-vis d'un isocyanate, de formule : 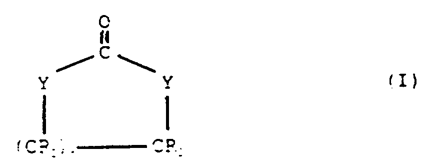 dans laquelle
Y représente O ou NR¹, chaque radical R¹ représentant indépendamment un radical alkyle inférieur en C₁ à C₆ ou un radical alkyle inférieur substitué avec un groupe réactif vis-à-vis d'un isocyanate ;
chaque groupe R représente indépendamment de l'hydrogène, un radical alkyle inférieur en C₁ à C₆ ou (CH₂)ₘ-X, où X est un groupe réactif vis-à-vis d'un isocyanate qui est un groupe OH ou NH₂ et m a la valeur 0, 1 ou 2 ; et
n est égal à 1 ou 2 ;
sous réserve que l'un au moins des groupes R¹ ou R soit lui-même ou comprenne un groupe réactif vis-à-vis d'un isocyanate ;
un liquide organique inerte, insoluble dans la matière réactive vis-à-vis d'un isocyanate et/ou dans le polyisocyanate, choisi parmi des hydrocarbures fortement fluorés ou perfluorés contenant avantageusement au moins un atome d'oxygène, d'azote ou de soufre, qui est présent comme phase dispersée d'une émulsion ou d'une micro-émulsion et un catalyseur contenant un sel métallique, caractérisée en ce que la matière réactive vis-à-vis d'un isocyanate comprend en outre un polyéther-polyol ayant une fonctionnalité nominale moyenne de 2 à 6 et une moyenne en nombre du poids moléculaire équivalent comprise entre 1000 et 2000.

10. Mousse rigide de polyuréthanne à cellules ouvertes, pouvant être obtenue par un procédé tel que défini dans l'une quelconque des revendications 1 à 8.

11. Panneau d'isolation sous vide comprenant une charge et un récipient formé d'un film étanche au gaz enveloppant cette charge, caractérisé en ce que la charge comprend une mousse rigide de polyuréthanne à cellules ouvertes telle que définie dans la revendication 10.
